# EUROPEAN PATENT APPLICATION

(11) **EP 1 008 887 A1**
(43) Date of publication of application: **14.06.2000**
(21) Application number: 97903386.7
(22) Date of filing: 22.01.1997
(51) Int. Cl.: G02B 27/22, H04N 13/00, G03B 35/24

(54) **DISPLAY SCREEN FOR THREE-DIMENSIONAL IMAGES**

(71) Applicant: Dominguez Montes, Juan, 28230 Las Rozas (ES)
(72) Inventor: Dominguez Montes, Juan, 28230 Las Rozas (ES)
(74) Representative: Carpintero Lopez, Francisco
(86) International application number: ES9700010
(87) International publication number: WO9833085

(57) **Abstract**

The device described in this invention is capable of reproducing images in three dimensions, that is, stereoscopic, three dimensional or integral, without needing glasses or any other device in front of the observer's eyes. It consists of an optic panel, composed of multiple projection objectives, behind each of which is situated an electronic image reproducer controller by a computer. The computer knows the position of each observer and optionally, the geometric deformation that may be produced on the objective panel and according to the latter, it sends a signal to the electronic image reproducer. As a result, the device sends a different image to each one of the eyes of each observer, independent of their number and location. The electronic component may reproduce by back projection or diffusion and does not require a high clearing speed, because it is independent of the number of bidimensional images used in the reproduction.

## Description

### OBJECT OF THE INVENTION

The present invention refers to an intelligent screen for the reproduction of three dimensional image, and more specifically to a system capable of reproducing images in three dimensions, that is, stereoscopic, three dimensional or integral, without the need of glasses, or any other device before the observer's eye.

### BACKGROUND OF THE INVENTION

Independent from systems developed as from 1947, based on the formation on images by means of interferences of consistent light rays, called holographic systems, the remaining system among which is included that described in this invention, will be classified in one of the following groups: stereoscopic, three dimensional and integral.

The term stereoscopic is used here to specify the systems using only two different images in the reproduction, one for each eye.

The term three dimensional is used to designate systems using in reproduction, more than two images and permitting observation with parallax within a wide horizontal viewing angle, without the need of bothering observers by placing any device in front of their eyes.

The term integral is used to designate system using a great number of images in the reproduction, permitting observation with horizontal and vertical parallax within a wide viewing angle.

Until today, most systems marketed in film projection belong to the group previously denominated as stereoscopic.

In these systems, two unique images are captured from two objectives whose optical centres are separated from each other by approximately the same average distance separating the optic centres of human beings' eyes.

Obviously, if in the reproduction the image captured by the left objective is made to arrive to the left eye and the other image to the right, the observer will see the image reproduced in its three dimensions.

There have been many procedures used to make each one of the images arrive to a different eye.

The first solution was proposed by D'Almeida in 1858. His solution consisted in situating a rotary shutter before the observer, such that it interrupted the passage of the light to one eye or the other alternatively. The glasses had to be synchronized with the project, which successively projected the images of the left and right eye. The noise, the mechanical complication and the electrical risk obliged this procedure to be abandoned.

An updated version of this procedure consists of locating before each eye a liquid crystal, preventing the passage of light to one eye whilst permitted to the other and in synchronism with this alternation, the images are projected.

In 1891, Ducos du Hauron suggested the anaglyphic method of image separation. The images are printed or projected in complementary colours and are observed with the filters of the same colours inverted. If the image of the left eye is blue, and the right eye green, the observer's left eye will see the latter through a red filter and viceversa. The most important disadvantages of this process are that, it is only possible to project images in black and white and that the fact that each eye sees an image of a different colour, produces the so-called retina confusion phenomenon which in many persons provokes a headache and in some others, nausea.

The projection with polarized light eliminates this disadvantages.

The method was patented by Anderton in 1891 and did not become commercially practical until 45 years later, when E.H. Land invented Polaroid in USA. Polaroid is a sheet of relatively cheep polarized plastic material. The procedure consists of projecting the image of one eye through a linearly polarized filter in one direction perpendicular to the filter used for the other eye. The images projected on a metallized screen which diffuses the unpolarized light are observed by each viewer with a filter over each eye polarized in directions parallel to the projector filters.

The greatest disadvantages of this method are that the fade-away of the non-desired image is not complete and that if the observer inclines his head, on rotating the polarization planes of his filters at the same time, the system loses its effectiveness.

The latter disadvantage has been recently solved by using circular polarized filters, reserving the left-handed polarization for one eye and the right handed for the other.

An attempt to free viewers from having to put up with glasses with polarized, coloured or obturated filters, was started by Ives in USA and was continued by Gabor in Great Britain, and many investigations and experiments were completed in the Soviet Union.

All these attempts rotate around a special screen receiving the two images and channelling them separately to each of the observer's eye. Basically, the screen consists of a series of opaque slats separated by a distance equal to their width and installed in front of a diffusing surface. This device is called track. The images corresponding to the right and left eyes are projected on the screen from projectors separated by a suitable distance and the track cuts the images in vertical strips. The viewers should sit in such a position that the trail hides one image from one eye and permits the observation of the other.

This system has several disadvantages such as the low light performance and the fact that the observers should keep their heads absolutely still.

Some variants to this system have been proposed, but it would appear that none of them have had commercial success.

Independent from what procedure is used to make a different image arrive to each eye, an additional disadvantage exists, common to all the stereoscopic systems, derived from the fact that all the observers perceive the same parallax, independent from the place of observation occupied. When viewing a real scene, the parallax is less for distant observers than for those nearby. As in the stereoscopic system, it is only possible to give a single parallax value for all the observers, corresponding to specific observation distance, the more distant observers will see the objects with disproportional depth, and viceversa in the case of the nearer observers.

Summarizing stereoscopic systems, it may be said that the two common disadvantages to all of them are:
- The need of bothering the observers by placing filters or another device in front of their eyes or making them keep their head still.
- The impossibility of reproducing each observation distance with an adjusted parallax. This provokes a deformation in the third dimension or depth of the image reproduced, which is a function of said distance.

Later on, three dimensional systems partially avoiding these disadvantages emerged.

Most of these three dimensional systems execute capture by means of a series of conventional objectives, located in different spacial positions arranged along a horizontal line or curve.

The reproduction system is different according to different authors. In the process described in US patent 1.918.705, Ives uses one or two rasters of vertical converging cylindrical lenses, depending on whether it is a front or rear projection and a diffusing surface, parallel to said rasters.

In this system, the maximum orthoscopic viewing angle is limited by the angle of aperture of the converging cylindrical components of the raster. In Cinemas with viewing angles greater than the above, these systems are not satisfactory.

The amount of information handled by these three dimensional systems depends on the number of images reproduced. As the maximum viewing angle is limited, the maximum number of images depends on the minimum angle each one of them occupies. This number is limited by the optical quality of the cylindrical components of the raster and in practice is insufficient for quality reproductions with distant observers.

In the three dimensional system described by the author of this invention in US patents 5.004.335, 5.013.147, 5.357.368, two rasters of converging or diverging cylindrical lenses are used.

In this system the orthoscopic viewing angle is not limited, it being possible to reach 180º. Neither is the number of images that may be used limited. For these reasons, the system is suitable for cinemas with any angle and any observation distance.

Nevertheless, when the angles and observation distances required by normal cinemas are used, the number of images necessary in the reproduction and as a result, the amount of information to be captured and processed is excessive.

In his PCT/ES96/00092, the author of this invention describes a reproduction device of three dimensional images without the use of lenticular rasters.

The different images are reproduced sequentially by back projection and appear supported on a liquid crystal observed by means of a special illumination.

This device seems to be suitable for reproductions on screens with a size similar to that of domestic televisions. Its disadvantages are the high number of images necessary in the reproductions of acceptable viewing angles and hence the great amount of information necessary to be treated and sequentially represented on the liquid crystal. Currently marketed liquid crystals respond to the clearing speed required with difficulty.

To solve the difficulties presented by the large amount of information necessary to treat and sequentially reproduced by back projection, some configuration devices have been designed similar to the above, that is, reproducing the different bi-dimensional images by back projection, illuminating it with a special illumination system, which, moreover focuses the light beam with the aid of converging optical system over the observers' eyes.

The British patent 2.272.597 by David Ezra, describes a configuration device similar to the above, whose purpose is stereoscopic reproduction, since it uses only two or three different images for a single observer. The image reproducing component by back projection only needs sufficient features for the sequential reproduction of two or three images.

Eichenland's European patent 0.576.106, describes a configuration device similar to that of David Ezra. However, his illumination and focussing system may be used for an extensive number of observers. It also uses a very reduced number of bi-dimensional images and this is possible because the focussing system, manages to direct the image corresponding to the left eye to all the observers' left eyes and similarly for the image corresponding to the right eye.

In these last three devices, all the images are reproduced sequentially by back projection and as a whole over a single electronic reproduction component, such that they have the following disadvantages:
- The size of the image reproduced is that of the electronic reproduction component itself.
- The number of different bi-dimensional images to be reproduced is limited by the features of the electronic component for back projection reproduction.
- Other reproduction components based on other procedures different from simple back projection, such as Cathode Ray Tubes (CRT), plasma, etc. cannot be used.

D. Dieter's German patent 4.123.895 and Meacham and G.B. Kirby's European patent 0.114.406, describe another three dimensional image reproduction device without the use of lenticular rasters, to obtain three dimensional reproduction for a great number of observers and a reduced number of images.

The different images are sequentially projected over a conventional diffusing surface and observed by means of an obturation panel made preferably in liquid crystal and located sufficiently separated from the observer, so as not to bother him.

The execution difficulties for this system are derived from the small clearing speeds of the liquid crystals currently marketed and the disadvantages involved by locating a liquid crystal panel in front of each observer.

The reproduction systems which besides horizontal parallax, as made by the three dimensional ones, also reproduce vertical parallax are called integral.

The invention of integral photography is thanks to M.G. Lippman in 1908.

The device he invented consisted of a sheet composed of an enormous number of converging lenses. Behind each one of these lenses, a different image is captured. The viewing of these images through the same lenses reproduces the scene, both with horizontal and vertical parallax in a pseudoscopic manner. A second capture of this pseudoscopic scene would permit the orthoscopic viewing of the first scene. In this device, it is advisable that the lenses and the film form part of a same set, such that they are kept rigidly joined in all the process, hence preventing difficult adjustments.

This systems suffers from the logical disadvantages derived from the fact that the lenses used are very small and as a result, the size of the images captured by them. Moreover, it is necessary to control the aperture of each lens, such that it does not flood the capture or reproduction field of the neighboring lenses. For all the above, the designs are complex and practically impossible to market, even for static images.

The author of this work proposed in US patents 5.013.147, PCT 90/00014 and the patent application PCT/ES96/00092 an integral reproduction system, based firstly on the capture of the scene by means of a series of conventional objectives located on the vertices of a rectangular lattice and later, on the projection from the same number of projecting objectives of these bidimensional images over two lenticular rasters, composed of converging or diverging cylindrical optical components, perpendicular to each other.

The number of images necessary and as a result, the amount of information to be treated is also too high.

In the same author's application for the Spanish Patent Number 9700076, an integral reproduction system is described based, firstly on the capture of the scene by means of a series of conventional objectives located on the vertices of a rectangular lattice and later on the projection from the same number of projecting objectives of these bidimensional images directly without any optical support, over which the different images are focussed. For this reason, it is necessary that the entrance pupils of the projection objectives had a rectangular shape, the sides of the adjacent rectangles being in contact with each other and without a gap between them.

As in the previous process, the number of images necessary and hence the amount of information to be processed it too high. Nevertheless, these two last systems will serve as a basis to explain the device, object of this invention.

Although the examination of the disadvantages in the different systems has been made by examining the problems arising in reproduction, logically the capture becomes more complex as the number of images used increases. In the three dimensional and integral systems, suitable for reproductions with a large number of observers, the capture of a high number of images is required obliging the design of a tremendously complex and voluminous capture device, impossible in most cases to respond to the requirements of filmation.

### DESCRIPTION OF THE INVENTION

The device described in this invention solves these disadvantages.

It is well known that an integral reproduction system has the capacity of making a different image arrive at each eye of each observer, wherever his location is, surpassing the three dimensional systems sending the same image for all the eyes located on the same vertical axis.

This invention takes advantage of the capacity of integral devices to send a different image to each eye, but different from traditional integral devices, the image sent to all the left eyes of all the observers may be the same, and likewise, the image sent to all the right eyes, hence managing that the amount of information captured, processed and then, supplied in the reproduction is very small.

To explain how to achieve this goal, the first thing to do is to design an integral reproduction system, similar to that done by the author of this invention in US Patent 5.013.147 and PCT 9000014. In these designs, the capture device of the scene consists of a series of conventional objectives, situated on the vertices of a rectangular lattice. Reproduction is achieved in the mentioned patents, by projecting from the same number of projecting objectives, as before that of capturing objectives, the bidimensional images captured, over two lenticular rasters, perpendicular to each other. Each raster may be composed of converging or diverging cylindrical optical components. The design condition obliges that the angle measuring the aperture of the cylindrical components should have the same value as the angle below which the internal edges of the two adjacent projection objectives are seen, both in the horizontal and vertical directions. From the geometrical center of the lenticular raster.

The reproduction is obtained in the mentioned application for the Spanish patent Number 9700076, with a panel of projecting objectives similar to the above, but eliminating the lenticular rasters for which it is necessary that the distance between the internal edges of each two adjacent projection objectives is null, both in the horizontal and vertical directions.

The integral reproduction device designed in this way, will consist of a panel of conventional projection objectives and two lenticular rasters, perpendicular to each other, or by a panel of rectangular objectives, adjacent to each other, whose projection is made without needing an optical support of the lenticular type.

In both cases, behind each projection objective, an electronic image reproduction device is located and in front of the objective lattice, the image is formed by projected. That is, the image observed is formed by projection over a double lenticular raster or in the air.

In the device, object of this invention, as in these devices the image is formed by projection and therefore cannot be seen directly over the electronic image reproducer as occurs in the devices mentioned in those designed by Ezra and Eicheland.

The device, purpose of this invention, consists of the same components as those described previously in the patents and patent application previously mentioned of the same author but is different from them in the manner to reproduce bidimensional images over the electronic reproduction component. In the previous devices, a different image is reproduced behind each projection objective. In the device, purpose of this invention, only the information corresponding to very few images is reproduced, two if the system is stereoscopic and one or several dozens if the system is designed as three dimensional or integral, to permit the observers to move their heads without the need to know its position in each moment.

In the previous systems, each bidimensional image occupies all the electronic reproduction element. In the system described in this invention, all the images are reproduced simultaneously in each electronic reproduction component, for which each image occupies a series of different places to those occupied by the other images.

The condition that these reproduction devices should satisfy is that they make a different image arrive to each eye of each observer.

For this condition to be satisfied, it is necessary and sufficient that the viewing angle is equal or greater than the reproduction angle.

If a same focussing plane is supposed for all the projection objectives pertaining to the panel, the viewing angle is the angle below which the optic centers of the observer's eyes further from said focussing plane from the geometrical center of this plane are seen. The reproduction angle is the angle below which, the optical centers of two adjacent projection objectives are seen from the geometrical center of the previous focussing plane.

It may be mathematically demonstrated without difficulty, that when the viewing angle is greater than the reproduction angle, the panel of projection objectives is capable of directing a different image to each eye of any observer independently from the size of the entrance pupil of each projection objective that may have a width equal to the distance between optic centers of two adjacent projection objectives.

The design conditions permit the focussing plane to be located in any place, whether in front of or behind the panel of projector objectives.

Once the place the projection or focussing plane to be occupied has been chosen, the viewing angle is determined by the distance to this plane from the more distant observer and by the distance between his eyes.

Having determined the viewing angle, the reproduction angle may reach as a maximum this same value. Generally, this maximum may be chosen for the reproduction angle.

With this value for the reproduction angle and the distance of the focussing plane to the panel of projection objectives, the distance between optical centers of two adjacent projection objectives is determined.

The maximum size of the electronic reproduction component situated behind each projector objective will be limited by this distance between the optical centers of the adjacent projection objectives.

This size of the electronic reproduction component should be sufficient to contain at least a number of horizontal and vertical pixels, equal to the number of possible eyes in both directions.

If this condition is not satisfied, the size of the electronic reproduction component should be increased, for which the distance between the focussing plane and the panel of projection objectives should also be increased.

Once it is managed that the panel of projection objectives and electronic reproduction components satisfy the previous requirement, the device will be able to direct a different image to either eye of each observer.

To explain this capacity, we will begin by locating a specific light source at any location of the viewing room. Each one of the projector objectives composing the panel will form over the plane where the electronic reproduction component is located, the image of this light source in a place determined by the intersection with said plane of the straight line passing through the geometrical center of the light source and the optical center of the projection objective.

Now then, each projection objective will form an image over the plane occupied by the electronic reproduction component for each light source. That is, as many images will be formed of this single source as objectives.

If now the inverse process is performed, that is, it is supposed that the electronic reproduction component illuminates a sector occupying the same space as in the previous process, the image of the specific light source occupied, and if an observer places the optical center of one of his eyes in the place previously occupied by the geometrical center of the light source, he will see the entire panel of objectives illuminated.

If, moreover, in each electronic reproduction component, instead of the previous simple uniformly illuminated space, its illumination and color is modulated with the information and color with the information that would correspond to the piece of image that this eye should observe, in the place occupied by the corresponding rectangular objective, the observer will see through this eye a single image reproduced over the entire objective panel.

Likewise, the same can be done with the other eye of the observer, in this way it being possible to direct the same or a different image to each one of his eyes, the electronic reproduction components containing only the information corresponding to one or two images.

The previous process may be repeated for all the eyes of all the observers, because the objective panel has been designed with sufficient capacity to discriminate the eyes of each observer. Nevertheless, although behind each objective an electronic reproduction component should be located with sufficient definition to reproduce the information in a number of places equal to the number of different eyes possible in the room, the amount of information is only that corresponding to two images, because the set of geometrical places corresponding to left eyes contains only the information corresponding to the image captured from this place, and similarly, for the right eye.

Compared with the systems mentioned in the previous designs of Ezra and Eicheland, the device, purpose of this invention, has the advantage that:
- The size of the image reproduced is independent of the size of the electronic reproduction component.
- The number of different bidimensional images to be reproduced is not limited by the features of the reproducing component.
- The electronic component may reproduce the images by diffusion or back projection, it being possible to use any type of electronic reproduction device, either reproducing by back projection or by diffusion.

Compared with the system described by Ezra, the device herein described, besides that said in the previous paragraph, may be used for any number of observers.

Compared with the system described by Eicheland, the device herein described, besides that said in the paragraph above, offers the advantage of being much simpler in its geometrical configuration.

The process by which the information of each image is directed to the places located in the electronic reproduction components, in correspondence with the situation of the observers' eyes is performed by a computer.

The computer above should know the coordinates fixing each one of the observers' eyes in space.

This initial input of data may be done manually, however, optionally in the device, purpose of this invention, two cameras may be used situated on the upper part of the rectangular objective panel. One on the left and the other on the right.

The field of vision of said cameras will cover all the space that may be occupied by observers.

In the data input operation, a single light source is situated each time in the place to be occupied by one observer's eye. The cameras may determine the x and y coordinates, and by means of parallax between the images of the two cameras, the z coordinate. A simple calculation will determine the x' and y' coordinates, corresponding to each one of the electronic reproduction components of each projection objective and each light source.

With this data the computer may send the information of the left eye to the places already determined (x' and y') in each electronic reproduction component and corresponding to all the possible left eyes of all the observers; the same procedure will be used for the image corresponding to the right eye.

In all the operations performed above, it has been implicitly supposed that the rectangular objective panel does not suffer any geometrical modification in time, because they are not altered by the change of environmental conditions, and the observers are kept are completely still with their eyes in the places previously informed to the computer. But in reality, none of this supposition is fulfilled.

The different environmental parameters, like vibrations, temperature and atmospheric pressure may alter the geometry of the panel of projector objectives to produce a disadjustment of sufficient size, such that the light rays are not directed to the places previously introduced in the computer as occupied by the observers eyes.

When it is considered necessary to obtain a permanent updated adjustment, that is, in real time, optionally four cameras may be located in the space occupied by the observers. These cameras direct their field of vision towards the panel of projector objectives. The system composed of a panel of projector objectives and electronic image reproducer will send the signal corresponding to a uniformly illuminated image, as a control signal to each one of these cameras, as if they were an observer's eyes.

When an environmental change is produced of sufficient magnitude, any projector rectangle stops illuminating any camera. The computer, after being informed of this disturbance, will change the x' and y' coordinates of the geometrical place corresponding to the objective of this camera in the electronic image reproducer, until managing to illuminate the camera again. After knowing the new coordinates, it will proportionally rectify the situation of the coordinates, corresponding to all the eyes of this rectangular objective and likewise will act with the possible disturbances of the remaining rectangular projector objectives.

With this operation, the projector objective panel always remains perfectly adjusted whatever the environmental and use conditions.

With this correction, the reproduction of a distinct image is guaranteed for each one of the situations of the eyes, which previously had been introduced as data in the computer.

Even supposing that we are considering a cinema where each observer remains seated in his seat, it is impossible to imagine that his head is kept permanently still. Any movement of the observer would disadjust the system and prevent correct viewing.

The device, object of this invention, solves this disadjustment in two different ways. Firstly, and given that in the device, purpose of this invention, the different bidimensional images are reproduced, each one of them in a different place from the electronic reproduction component, not requiring high clearing speed performance.

This is not possible in the devices previously mentioned in the background, in which the images are sequentially reproduced in the same place, since they occupy all the space of the reproducing component, which compulsorily has to reproduce by back projection.

The first solution consists of making a three dimensional or integral system. These systems, as has been explained, permit the observer to move within a so-called viewing angle. If the observer can only move in a space, for example, in a cinema limited by the with of his seat itself, the viewing angle may be covered with approximately one dozen different bidimensional images for a three dimensional system and, with approximately double for an integral system.

With this reduced number of images, all the space may be covered from the left end to the right end, in which each observer may move freely in his seat.

The same images covering the viewing angle for one observer serve to cover all the observers.

Here, a three dimensional or integral reproduction system is obtained, similar to that described in Dieter's German patent, regarding the number of images necessary in the reproduction, but with the advantage compared with the latter, that high clearing speeds are not necessary, nor the installation of an obturation panel for each observer in the cinema.

Compared with the stereoscopic system initially explained, the three dimensional and integral systems described in this invention offer the possibility of reproducing a parallax different for each observation distance, such that in-depth or the third dimension deformation, indicated in the background, are avoided.

The second solution consists of keeping the computer informed in real time of the location of the observers' heads.

In this way, although the observers may move freely, the system continues being stereoscopic, that is it may continue using the information corresponding to two single images. The different procedures permitting the computer to be informed of the situation of the heads, is not a purpose of this invention.

Once the computer has been informed that an observer has moved his head, it changes in function of this movement in each electronic reproducing component of each projector objective, the place where the left and right images are reproduced corresponding to each observer.

Due to the fact that the maximum speed at which an observer may move is limited, the clearing speed of these electronic reproducing components need not be greater than the conventional one to make said change in a useful time.

The size of the image reproduced in the device described in this invention, since it is a conventional projection, does not depend on the size of the electronic reproduction component and hence, may be any size.

The device, object of this invention, can reproduce images in three dimensions for any number of observers and independent of their location, without having to use any device in front of their eyes and have a projector objective panel whose distance between optical centers of two adjacent horizontal objectives is determined by the horizontal reproduction angle, necessary to provide a different image in each eye of each observer and the distance between two vertical projection objectives is determined by the vertical reproduction angle, it being possible that this panel be made with conventional objectives, in which case the projection is performed over a double lenticular raster, or with objectives whose entrance pupil has a rectangular shape, the vertical and horizontal sides of the adjacent rectangles being in contact with each other and without gaps between them, in which case the projection is made directly in the air with no material support characterized in that behind each objective there is an electronic reproduction component, governed by sufficient data processing means to send the signal with the information of the different images, simultaneously to all the places, especially situated in this electronic component, such that the projection objectives, arrange to focus all the images in a same plane, send the light beams with the information of each image to the points where it is possible to locate or is located the observer's eye, for which, the computer is informed of the situation of these eyes in real time or previously, such that:
- optionally it may have two cameras situated in the upper left and right vertices of the objective panel and whose field of vision covers all the space occupied by the observers, and
- optionally by means of four cameras, situated in the observation area and whose field of vision is the panel of rectangular objectives and is also informed of the geometric deformations that may be produced in the panel, the computer being able to correct the latter and to calibrate the panel in real time.

### BRIEF DESCRIPTION OF THE DRAWINGS

With the purpose of explaining the invention simply, ten figures had been prepared.
Figures 1, 2 and 3 show integral reproduction devices claimed in other previous patents, by the same author.
Figure 4 shows the formation of the image from a light source in a system like that described in figures 1 and 2.
Figure 5 shows the formation of the image from a light source in a system like that described in Figure 3.
Figure 6 shows the inverse process to that shown in figure 5.
Figure 7 shows the process as a whole, shown in figure 6. Two light sources are used.
Figure 8 shows a second generalization of figure 7. Several light sources are used.
Figure 9 shows to cameras for the introduction of data to the computer with the situation of the observers' eyes.
Figure 10 shows the cameras serving to inform the computer in real time of the disadjustments produced in the objective panel.
Figure 11 shows an application of the device, object of this invention, in the three dimensional reproduction of images.
Figure 12 shows the variation of the rectangle panels in function of the observation distance to prevent deformation in the third dimension.
Figure 13 shows an application of the device, purpose of this invention in the integral reproduction of images.
Figure 14 shows the variation of the square panels in function of the observation distance to prevent deformation in the third dimension.

### DETAILED DESCRIPTION OF THE DRAWINGS

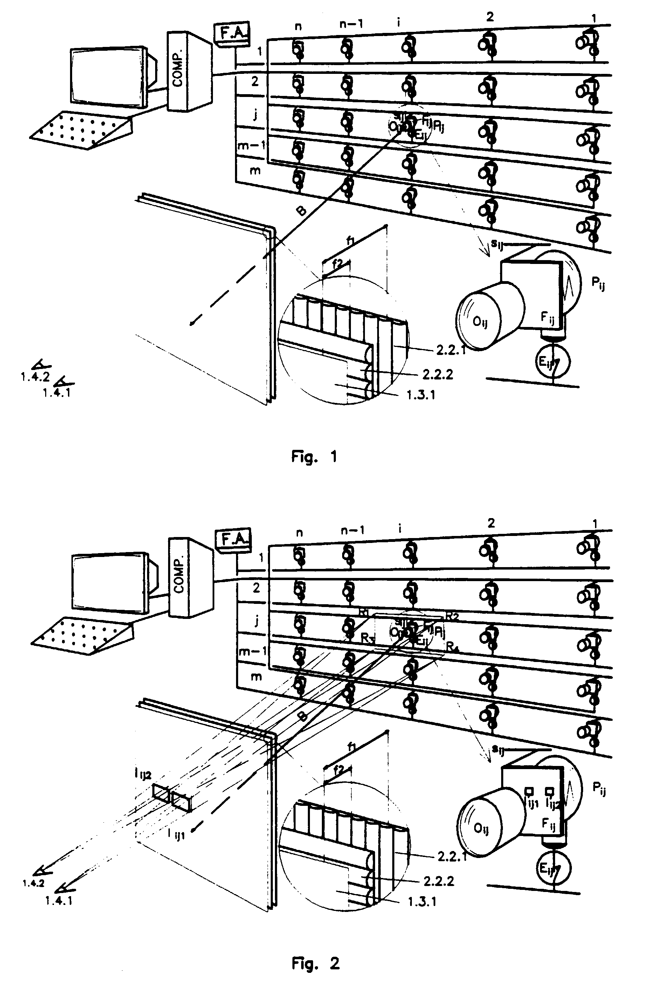

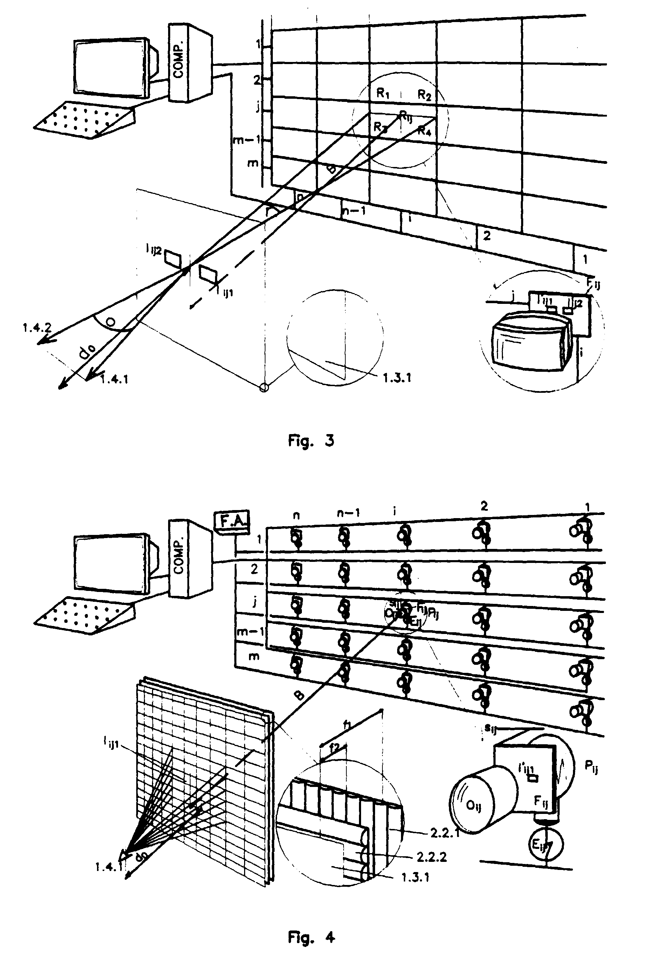

Figures 1, 2 and 3 are not the object of this invention, and serve as an introduction to show the operation of the integral reproduction devices based on the angular differentiation of images. Figures 1 and 2 show the device operating with lenticular rasters and figure 3, without the latter.

Figure 1 shows the three sets of essential and necessary components to show the operation of the system. Firstly, a series of n x m projectors Pij grouped in m rows and n columns with their corresponding objectives or Oij. The optical centers of the horizontal objectives are equally distant from each other, and similarly the optical centers of the vertical objectives. These objectives are on the vertices of a rectangular lattice. Each projector is fed by a power supply F.A. by means of a manually triggered switch Eij. On each projector a different image is located that may be supported photographically or electronically.

In this figure, each projector has been equipped with a liquid crystal Fij, each one of them fed from a single computer, COMP. The signal with the information contents of each image is called Sij.

Secondly, the optical system composed of two parallel lenticular rasters is shown. Although in this figure, these rasters have been drawn converging, both may be diverging or one converging and the other diverging. The first lenticular raster 2.2.1 with vertical cylindrical components has one horizontal aperture, determined by an angle of the same value as the angle below which the interior edges of the pupils are seen of two adjacent horizontal objectives, the latter being determined by two lines passing through the geometric center of the raster and each one of them through the internal edge of the pupils of two adjacent projector objectives, situated on a horizontal line, the second lenticular raster 2.2.2, with horizontal cylindrical components, has a vertical aperture determined by the angle below which the internal edges are seen of the pupils of two adjacent vertical objectives, being determined by two lines passing through the geometrical center of the raster and each one of them through the internal edge of the pupils of two adjacent projector objectives, located on a vertical line.

Thirdly, one finds the transparent focus surface 1.3.1, located at a distance B from the projectors and the focal distance f1 and f2, respectively of the rasters 2.2.1 and 2.2.2. This transparent surface is the place where all the projected images are focussed, through each one of the projectors Pij. In said figure, two different points of observation 1.4.1 and 1.4.2 are also represented.

Figure 2 shows the projection through the projector Pij of the image Fij. For this, only the switch Eij should be activated. The image formed in Fij by the signal Sij coming from the computer is projected and focussed on the transparent surface 1.3.1. From the point of observation 1.4.1, only the rectangle denominated in the figure IijI will be seen of this image. Similarly, from point 1.4.2 the rectangle Iij2 will be seen. The optical effect is the same the projection would produce from an objective whose optical projection system or entrance pupil had the shape of a rectangle whose width were equal to the distance between two optical centers of two adjacent horizontal projection objectives and of height equal to the distance between the optical centers of two adjacent vertical objectives and at the same time, the lenticular rasters would be eliminated.

The relation between the width and the height of the rectangles Iij1 and Iij2 is the same as the quotient between the distance between the optical centers of two adjacent horizontal projection objectives and the distance between the optical centers of two adjacent vertical projection objectives. Both rectangles Iij1 and Iij2 of the image projected, correspond to two pieces, also rectangular, of the image Fij on the electronic reproduction support.

In this image Fij generated over the electronic reproduction component, there are two rectangles I'ij1 and I'ij2, that may easily be determined by the classical laws of geometrical optics, which contain the information projected on the rectangles Iij1 and Iij2.

Figure 3 shows an integral reproduction system, without the use of lenticular rasters. In it, the three sets of essential and necessary components are detailed, to explain the operation of an integral reproduction system. Firstly, a series of n x m rectangular projector objectives Rij, grouped in m rows and n columns whose rectangular shape R1R2R3R4 is the same for all of them. The optical centers of the rectangular objectives are equidistant from each other; and similarly the optical centers of the vertical objectives. This optical centers are on the vertices of a rectangular lattice. Secondly, behind each projector objective a different image is situated that may be supported on a photographic film or an electronic support. In this figure, behind each projector objective an electronic image generating component has been located, for the diffusion Fij, each one of them fed from a single computer COMP. Thirdly, the transparent focussing surface 1.3.1 is to be found, located at a distance B from the projector objectives Rij.

This transparent surface is the place where the images generated in the electronic reproduction component are focussed.

Also, the reproduction angle r is represented, formed by two straight lines, both of which pass through the geometric center of the focussing plane 1.3.1, each one of them passing through the middle points of the segments R1R3 and R2R4 determining the left and right edges of the projection objective Rij. In said figure, also two different observation points 1.4.1 and 1.4.2 appear, corresponding to the right and left eyes of an observer located at a distance d0 from focussing plane 1.3.1. The viewing angle corresponding to said observer has been called 0 in said figure and is the angle formed by two straight lines, both passing through the geometric center of the focussing plane, and each one of them through the optic center of each one of the observer's eyes.

The design condition, as already has been explained, is that the viewing angle O should be greater or equal to the reproduction angle r, a necessary and sufficient condition, such that every observer sees a different image with each eye. This condition is satisfied for all the observers is fulfilled for the observer with less viewing angle, who would be the furthest from the focussing plane.

When the devices shown in figures 1, 2 and 3 operate as integral image reproducers behind each projection objective Oij, a different image Fij is located. If the points of observation 1.4.1 and 1.4.2 correspond with the two eyes of a single observer for each one of them, a different image will be seen. Firstly, from the image Fij projected by any objective Oij, each eye sees a different rectangle Iij1 and Iij2, that for the previous design condition corresponds to the pieces of the image Fij, I'ij1 and I'ij2 on the electronic support not having common parts. Secondly, the same design condition demands that for the place occupied by the rectangle Iij1, the observer 1 sees a rectangle belonging to the image Fij, but observer two will see through the same rectangle a piece of image belonging to another image different from Fij.

The device, object of this invention may consist of a series of conventional projector objectives and a double lenticular raster as shown in figures 1 and 2 or by a series of objectives whose entrance pupil has a rectangular shape, the vertical and horizontal sides of the adjacent objectives being in contact with each other and without a gap between them, as shown in figure 3. This figure 3 has only been selected due to its simplicity as a base for the explanation of the rest of the operation, but it should be understood that it may, likewise, be done with figures 1 or 2.

Also, the device, object of this invention, coincides with those described in figures 1, 2 and 3, in which behind each projection objective a component capable of electronically generating images is located, it not being important if by back projection and uniform lighting or by diffusion, such as CRT, plasma, projectors over a translucid or opaque diffusing screen, et.

Nevertheless, the difference lies in the method of image formation on the electronic reproducing support. In the traditional systems behind each projection objective a different image is located captured from a different spacial situation. In the system, object of this invention, this does not occur as explained below.

Figure 4 shows the formation of the image I'ij1 behind each one of the projector objectives of a single specific light source 1.4.1, which acts as an object for these converging optical systems. Each projection objective together with the double lenticular raster creates an image of this object; the geometrical center of this image is determined by the intersection of the line joining the luminous point 1.4.1 and the optic center of the projection objective with the plane occupied by the electronic image reproducer component.

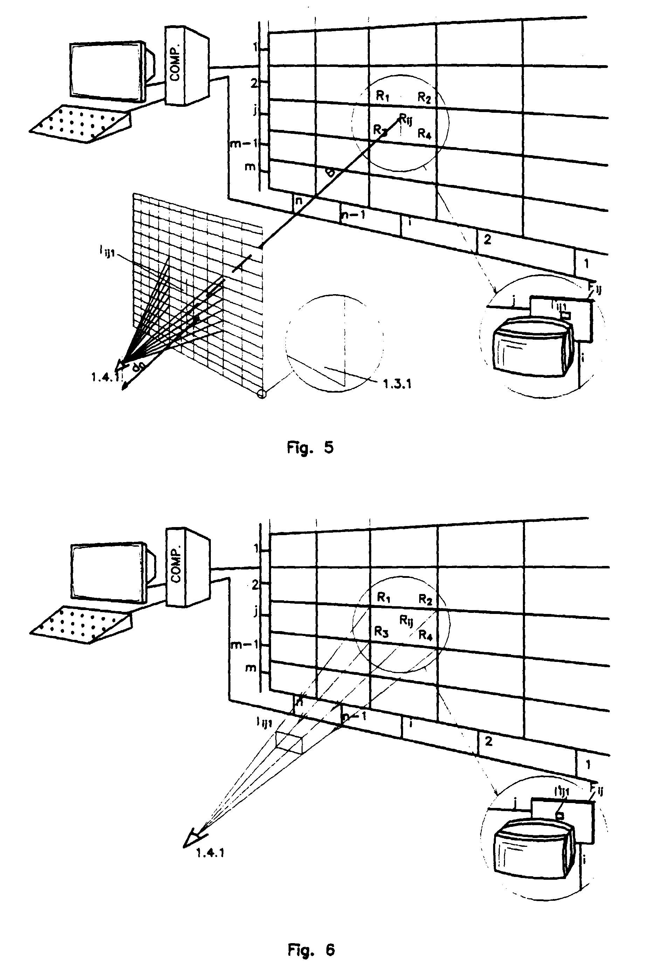

Figure 5 shows the formation of the image I'ij1, behind each one of the rectangular projector objectives, from a single light source 1.4.1 that acts as an object of this converging optical systems. Each rectangular projection objective creates an image of this object; the geometric center of this image is determined by the intersection of the line joining the luminous point 1.4.1 and the optic center of the projection objective with the plane occupied by the electronic image reproducer component.

Figure 6 shows the inverse process to that shown in figure 5. In this figure, the sectors I'ij1 which now act as an object of the projector objectives occupy the same geometric positions on the electronic reproduction component Fij which in figure 5 occupied the images I'ij1. The system directors all the light rays transmitted by the electronic reproduction component, through the projector objectives to the focussing point 1.4.1, occupying the same place which before, was occupied by the light source 1.4.1 in figure 5.

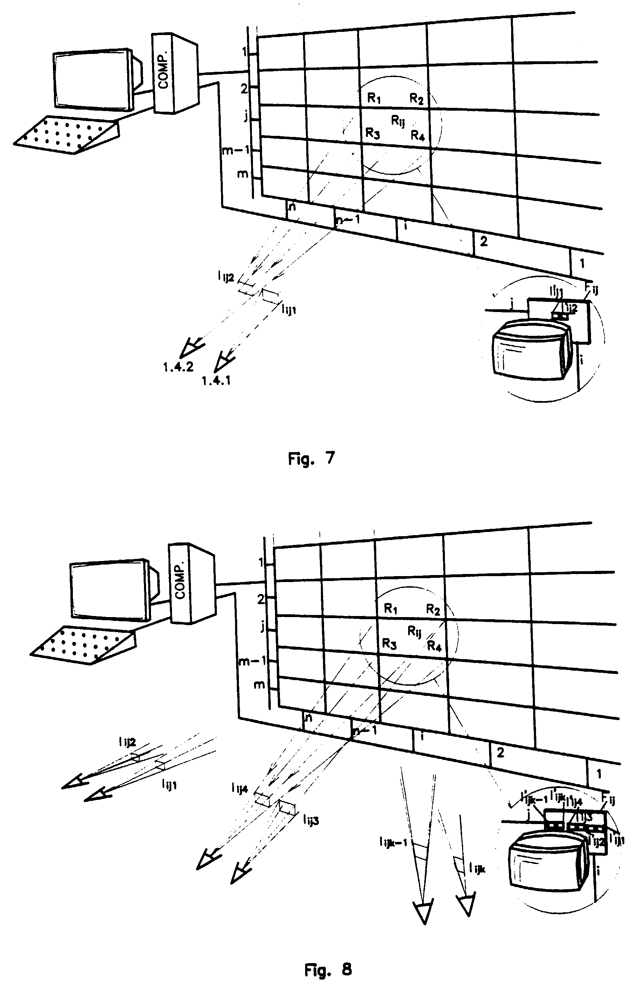

Figure 7 is a first generalization of figure 6. This figure shows the formation in the space of two luminous points 1.4.1 and 1.4.2, that may correspond to the left and right eyes of an observer. For this purpose, a similar process is followed for the point 1.4.2 that was followed in figure 5 with the focussing point 1.4.1.

It is interesting to observe that the rectangular sectors I'ij1 and I'ij2 corresponding to each one of the previous sources over the electronic reproduction component, will not have common zones, due to the fact that the design condition is satisfied for all observers obliging that the viewing angle is greater or equal to the reproduction angle.

Figure 8, is a second generalization of figure 6. This figure shows the formation in the space of a set, greater than two, of luminous points, permitting the representation of each pair of them the situation of a pair of eyes belonging to a different observer. Operating in this inverse way, the rectangular objective panel may generate as many specific images as eyes, independent of the number. To perform said operation, the computer needs to govern the situation of each one of the rectangular sectors I'ijk.

If besides governing said situation, the computer modulates the light transmission from said sectors with the color and light corresponding to the light and color that each sector Rij would have if on the projector objective panel, the image corresponding to the left eye of the observer is formed, all the observers will see precisely this sole image through their left eye.

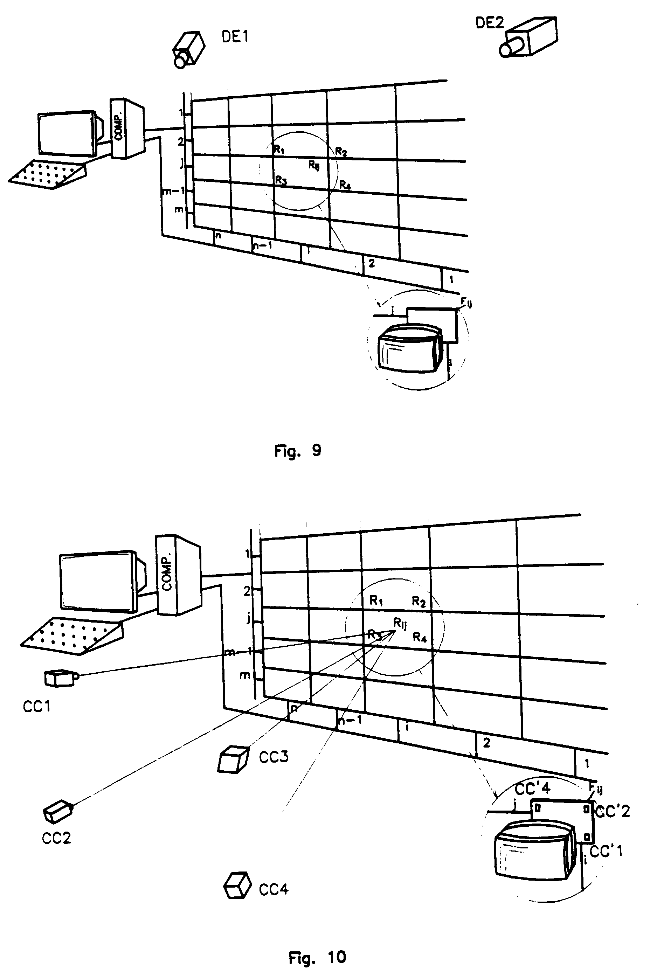

Figure 9 shows the cameras DE1 and DE2 situated on the upper left and right edges of the rectangular objective panel, serving to supply the data to the computer with the situation of the observers eyes. The field of vision of said cameras covers all the space occupied by the observers.

Similar to that shown in figure 4, for each rectangular projection objective, each one of these cameras forms an image for each one of the possible situations of a specific light source.

In the data input to the computer, the specific light source should be situated in the place which one of the observer's eyes will occupy. With the situation of the image of this light source in each one of the cameras DE1 and DE2, the computer will know the parallax and hence, the situation in the observation space of said source. A very simple calculation will allow it to know the situation of the image of said source in each one of the liquid crystal components of the panel Likewise, it will proceed for the remaining locations of all the eyes of all the observers. Once completed this operation, the computer will have stored the coordinates, in each electronic reproduction component, of all the possible locations of the eyes of all the observers. If the eyes of these observers remains still, the computer by means of the image control of the sectors transmitting light from each reproducing component will be able to manage that each eye of each observer sees the image corresponding to it.

Figure 10, shows four cameras CC1, CC2, CC3 and CC4, approximately situated on the four extreme edges of the observation space in front of the rectangular projector panel. The field of vision of each one of these cameras covers the surface occupied by the rectangular projector panel. In the data input through cameras DE1 and DE2, the computer is also informed of the situation in the observation space of the optical centers of the objectives of said cameras. In the reproduction, the computer will send a uniformly illuminated image to each one of these cameras. For these purpose, it uniformly illuminates the four rectangles CC'1, CC'2, CC'3 and CC'4 over each reproduction component Fij. When the rectangle panel is reproducing images, these four cameras inform the computer in real time about the imbalances produced in each rectangular projector component of the panel. The computer will modify the situation of the images corresponding to these cameras in each one of the disadjusted projector objectives returning the panel to the initial situation. Knowing the modification executed in each image of each camera in the liquid crystal of the disadjusted projector, it will modify in the same proportion the situation of the remaining images corresponding to all the eyes. In this way, the rectangle panel remains always adjusted and the images sent are always focussed on the places occupied by the eyes.

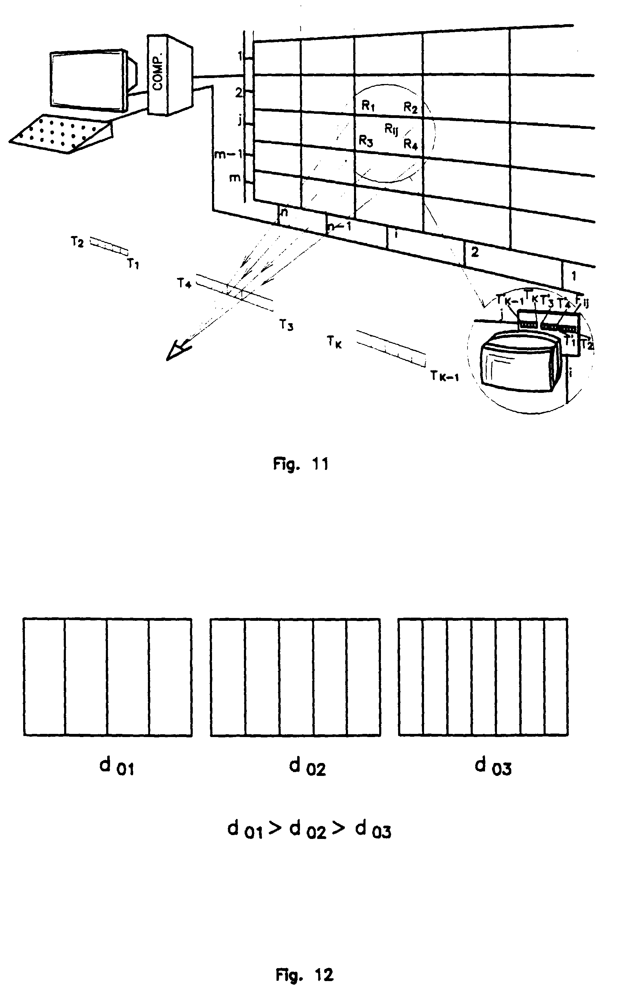

Figure 11 shows the use of the device, object of this invention, in three dimensional reproduction. In the previous figures, the device, purpose of this invention, has been used in stereoscopic reproduction systems, that is, with two single images. In these reproductions, although the observers may be located in any place of those which previously have been informed to the computer in the data input operation, they should remain still in said location. Nevertheless, the device, purpose of this invention may also be used for three dimensional reproduction with a viewing angle that may be limited by the space in which the observer may move freely. With this limitation, the number of images necessary is reduced and of the same order as employed in Dieter's patent, but with the advantage compared with the latter of not requiring the installation of a liquid crystal panel in front of each observer and that the clearing speed of the electronic reproduction components necessary for the manufacture of the device, purpose of this invention, neither needs to be greater than the conventional. The way of obtaining a three dimensional reproduction system with the device, purpose of this invention, is to provide each observer as many images as those that would be needed to cover the free observation space. This limited number of images would be sufficient to provide a three dimensional view for all observers simultaneously.

In figure 11, the field of vision of each observer has been represented by a rectangle panel t1t2, t2t4, ..., tk-1,tk, in which each internal rectangle represents a different image. Similarly, over the electronic reproduction support, the images reproduced in the places determined by the rectangle panels t'1t'2, t'3t'4.......t'k-1,tk will appear.

When one wants to eliminate the deformation in the third dimension caused by reproducing the same parallax for all the observers, different rectangle panels are used for each observer and observation distance function.

Figure 12 shows different rectangle panels corresponding to three different observation distances, d01 the furthest, d02 the intermediate and d03 the nearest. In the three cases the angle below which each image rectangle is seen from the geometric center of the focussing plane 1.3.1 is the same. With this design, deformation in the third dimension suffered by stereoscopic systems is avoided.

If the separation between these images is made less than the separation between the observers eyes, the device will have to be designed with the new viewing angle resulting from this new distance.

If we are dealing with an integral reproduction system, we will operate similarly, to that of a three dimensional system.

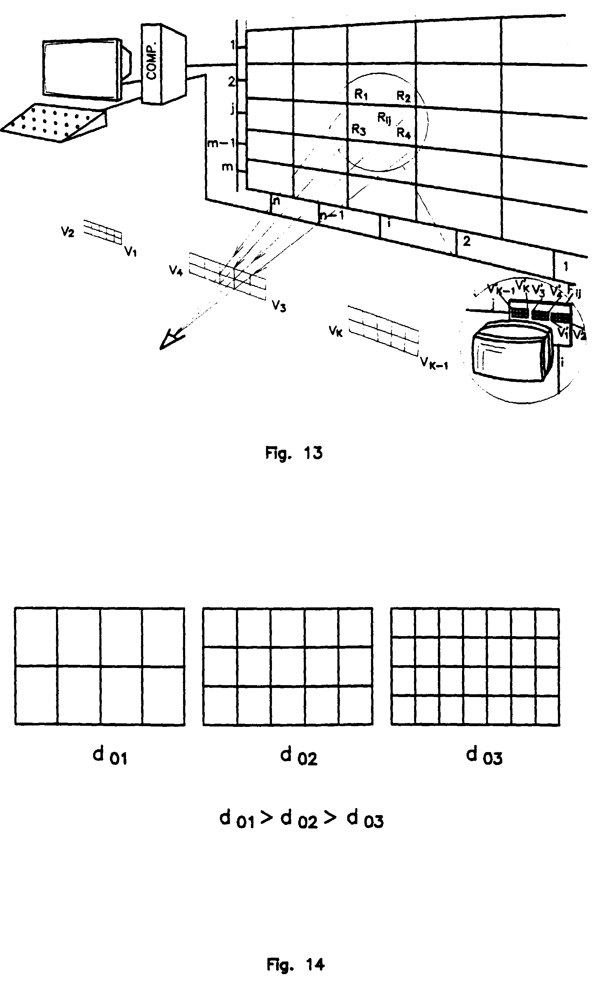

Figure 13 shows an operation scheme of the device, purpose of this invention, operating with integral reproduction systems. In figure 12, the field of vision of each observer has been represented by a square panel v1v2, v2v4.... vk-1vk, in which each internal square represents a different image. Similarly, over the electronic reproduction support the images reproduced in the places determined by the square panels v'1v'2, v'3v'4.... v'k-1v'k will appear.

Figure 14 shows different square panels corresponding to three different observation distances, d01, the furthest, d02, intermediate, and d03, the nearest. In the three cases the angle below which each image square is seen from the geometric center of the focusing plane 1.3.1 is the same. With this design the deformation in the third dimensions suffered by stereoscopic system is avoided.

## Claims

1. A screen for the reproduction of images in three dimensions, capable of reproducing said images in three dimensions for any number of observers and independent of their location, without the need of using any device in front of their eyes, having a projector objective panel whose distance between optic centers of two adjacent horizontal objectives is determined by the horizontal reproduction angle necessary to provide a different image to each eye of each observer and that the distance between two vertical projection objectives is determined by the vertical reproduction angle, said panel being able to be made with conventional objectives, in which case projection is made over a double lenticular raster or with objectives whose entrance pupil has a rectangular shape, the vertical and horizontal sides of the rectangles being in contact with each other and without gaps between them, in whose case the projection is made directly in the air without material support, characterized in that behind each objective and electronic reproduction component is located, governed by sufficient data processing means to send the signal with the information of the different images, simultaneously to all the places especially situated in this electronic component, in such a way that the projection objectives, arranged to focus all the images on the same plane, send light rays with the information of said image, to the points where it is possible to locate or is located the observer's eye, for which, the computer is informed of the situation of these eyes in real time or previously, and for which it may optionally have two cameras situated on the upper left and right vertices of the objective panel and whose of vision covers all the space occupied by the observers and optionally through four cameras, located in the observation space and whose field of vision is the rectangular objective panel. The computer is also informed of the geometric deformations that may be produced on the panel, the computer being able to correct these and calibrate the panel in real time.

2. A screen for the reproduction of images in three dimensions, according to claim 1, characterized in that the electronic reproduction component generates the images over a diffusing surface, such as a Cathode Ray Tube (CRT), plasma, translucid or opaque diffusing projection screen, or the ends of conducting components, amplifiers or light generators.

3. A screen for the reproduction of images in three dimensions, according to claim 1, characterized in that the electronic reproduction component generates the images by back projection and in parallel, and to this, a uniformly illuminated diffusing surface is situated.

4. A screen for the reproduction of images in three dimensions, according to previous claims, characterized in that the number of images used is only two, one for each eye.

5. A screen for the reproduction of images in three dimensions, according to claims 1, 2 and 3, characterized in that the number of different images is that necessary to obtain sufficient viewing angle to cover the horizontal space, in which any observer may move freely.

6. A screen for the reproduction of images in three dimensions, according to claims 1, 2 and 3, characterized in that the number of different images used is that necessary to obtain sufficient viewing angles to cover the horizontal and vertical space, in which any observer may move freely.

7. A screen for the reproduction of images in three dimensions, according to claims 1, 2, 3, 5 and 6, characterized in that the positional separation between the different images reproduced is the same for all the observers.

8. A screen for the reproduction of images in three dimensions, according to claims 1, 2, 3, 5 and 6, characterized in that the angular separation between the different images reproduced is the same for all the observers.

## Amended claims

### Amended claims under Art. 19.1 PCT

1. A screen for the reproduction of images in three dimensions, capable of reproducing said images in three dimensions for any number of observers and independent from their location, without needing to use any device in front of their eyes. This screen is controlled by a computer, which is informed of the location of the eyes of each observer, either in real time or previously, for which optionally it may have two cameras, situated on the upper left and right vertices of said screen, characterized by a projector objective panel, whose distance between optic centers of two adjacent horizontal objectives is determined by the horizontal reproduction angle, necessary to provide a different image to each eye of each observer, and that the distance between two vertical projection objectives is determined by the vertical reproduction angle, it being possible for this panel to be made with conventional objectives, that is, with circular entrance pupil and with a diameter less than the size of the objective itself, in which case the focussing is made over a projection plane, where a double lenticular raster is situated with the axis of the perpendicular cylinders, between each other, and sufficient horizontal and vertical apertures for the image to be seen completely, or with objectives whose entrance pupil have a rectangular shape, the vertical and horizontal sides of the adjacent rectangles being in contact with each other and without a gap between them, in whose case the focussing is made over the same previous projection plane where no material support is found, being located behind each projector objective, an electronic reproduction element, controlled by sufficient data processing means to send a signal with the information of color and light intensity of the different images, directly and simultaneously, to as many different places per component as number of possible observation points. In each one of these places, only a partial rectangular shaped piece of the complete image is reproduced, these rectangular pieces acting as an object of the objectives. For this purpose, they are especially situated in this electronic component, so that the projection objectives, focussing all these pieces of images on a same projection plane, parallel to the plane containing the previous electronic reproduction component, sends the light rays with the information of each rectangular piece of image to the points where it is possible to locate or is located the eye of an observer, from where a complete image will be observed, situated on the projection plane, formed by the set of image rectangles focussed on said plane, and corresponding to the image that should be seen from this observation point, for which, the computer is optionally informed, by means of four cameras situated in the observation space and whose field of vision is the objective panel of the geometric deformations that may be produced on the panel, the computer being able to correct them and calibrate the panel in real time.

2. A screen for the reproduction of images in three dimensions, according to claim 1, characterized in that the electronic reproduction component generates the light modulated in intensity and color of as many rectangular pieces of images as possible observation points, over a diffusing surface, such as a Cathode Ray Tube (CRT), plasma, translucid or opaque diffusing projection screen, or the ends of conducting components, amplifiers or light generators.

3. A screen for the reproduction of images in three dimensions, according to claim 1, characterized in that the electronic reproduction component generates the modulation intensity and color of as many rectangular pieces of images as possible observation points and in parallel by back projection. To the latter, a uniformly illuminated diffusing surface is situated.
